(19) **Europäisches Patentamt European Patent Office Office européen des brevets**

(11) **EP 4 696 533 A1**

(12) **EUROPEAN PATENT APPLICATION**
published in accordance with Art. 153(4) EPC

(43) Date of publication:
**18.02.2026 Bulletin 2026/08**

(21) Application number: **24830684.7**

(22) Date of filing: **24.06.2024**

(51) International Patent Classification (IPC):
**B60K 1/02** *(2006.01)* **B60K 17/02** *(2006.01)*
**B60K 17/04** *(2006.01)* **B60K 17/22** *(2006.01)*

(52) Cooperative Patent Classification (CPC):
**Y02T 10/64**

(86) International application number:
**PCT/CN2024/100901**

(87) International publication number:
**WO 2025/002039 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 CN 202310804499**

(71) Applicant: **Dongfeng Motor Group Co., Ltd Hubei 430056 (CN)**

(72) Inventors:
• **LEI, Jun**
  **Wuhan, Hubei 430056 (CN)**

• **XUE, Long**
  **Wuhan, Hubei 430056 (CN)**
• **TANG, Chen**
  **Wuhan, Hubei 430056 (CN)**
• **LIU, Hong**
  **Wuhan, Hubei 430056 (CN)**
• **NIE, Shaowen**
  **Wuhan, Hubei 430056 (CN)**

(74) Representative: **Valet Patent Services Limited c/o Caya 83713X Am Börstig 5 96052 Bamberg (DE)**

(54) **DRIVE ASSEMBLY, VEHICLE, AND CONTROL METHOD**

(57) A drive assembly, comprising an electric motor (1) and a clutch-transmission group, wherein the electric motor (1) comprises a stator (11), which is provided with an inner coil and an outer coil, an outer rotor (12) rotatably arranged outside the stator (11), and a first inner rotor (13) and a second inner rotor (14) rotatably arranged inside the stator (11), the first inner rotor (13) and the second inner rotor (14) being independently arranged relative to each other; the outer rotor (12) serves as a first mechanical-power output end of the electric motor (1), and the first inner rotor (13) and the second inner rotor (14) serve as a second mechanical-power output end of the electric motor (1). The clutch-transmission group comprises a first input end, a second input end, a first output end and a second output end; the outer rotor (12) and the first inner rotor (13) are each in transmission connection with the first input end. The outer rotor (12) and the second inner rotor (14) are each in transmission connection with the second input end. The first input end is in transmission coupling with the first output end, and the second input end is in transmission coupling with the second output end. The first output end is configured to be in transmission connection with a left wheel (6), and the second output end is configured to be in transmission connection with a right wheel (7).

**(Cont. next page)**

EP 4 696 533 A1

FIG. 1

**Description**

CROSS-REFERENCE TO RELATED APPLICATION

This application is based on and claims priority to Chinese patent application No. 202310804499.0, filed on June 30 2023, the entire contents of which are incorporated herein by reference.

TECHNICAL FIELD

The invention relates to the field of vehicle technology, and in particular to a drive assembly, a vehicle, and a control method.

BACKGROUND

With a backdrop of increasingly severe global energy and environmental challenges, environmentally friendly and energy-saving electric vehicles have become a hot topic. For example, in a four-wheel independent drive system in an electric vehicle, four electric motors individually drive four wheels of a vehicle, i.e., one electric motor independently drives one wheel. Torques and speeds of the four wheels can be independently and precisely controlled, respectively, thereby achieving a series of advantages, such as a smaller turning radius, an auxiliary ESP function, an auxiliary steering function, and an auxiliary braking function and the like.

However, an existing four-wheel independent drive system is typically large, heavy, and costly, and cannot meet requirements of a higher power density of a vehicle.

SUMMARY

The invention provides a drive assembly, a vehicle, and a control method, which have advantages of a compact structure and a higher power density.

In a first aspect, the invention provides a drive assembly, comprising an electric motor and a clutch-transmission group. Optionally, the electric motor comprises a stator, which is provided with an inner coil and an outer coil, an outer rotor, which is rotatable and is arranged outside of the stator, and a first inner rotor and a second inner rotor, which are rotatable and are arranged inside of the stator, the first inner rotor and the second inner rotor being arranged independent of each other; the outer rotor serves as a first power output end of the electric motor, and the first inner rotor and the second inner rotor serve as a second power output end of the electric motor. The clutch-transmission group comprises a first input end, a second input end, a first output end and a second output end; the outer rotor and the first inner rotor are each in transmission connection with the first input end. The outer rotor and the second inner rotor are each in transmission connection with the second input end. The first input end is in transmission coupling with the first output end, and the second input end is in transmission coupling with the second output end. The first output end is configured to be in transmission connection with a left wheel, and the second output end is configured to be in transmission connection with a right wheel.

In a second aspect, the invention provides a vehicle, comprising a vehicle body, a left wheel, a right wheel, and the drive assembly according to any one of embodiments of the first aspect. The left wheel and the right wheel are arranged below the vehicle body. The left wheel is in transmission connection with a first output end of a clutch-transmission group. The right wheel is in transmission connection with a second output end of the clutch-transmission group. The whole vehicle controller is configured to control a response action of the electric motor. Since the vehicle in the invention comprises the drive assembly according to any one of embodiments of the first aspect, the vehicle has the same technical effects, that is, the advantages of a compact structure and a higher power density.

In a third aspect, the invention further provides a control method, utilizing any one of the drive assemblies in the first aspect. The control method comprises: obtaining a current driving parameter of vehicle which comprises at least turning radiuses of the left wheel and the right wheel; determining a current driving condition of the vehicle according to the current vehicle driving parameter, the current driving condition comprising a straight-line driving condition and a turning driving condition; and controlling, when the vehicle is in the turning driving condition, the first inner rotor to output a first preset rotation speed and the second inner rotor to output a second preset rotation speed, to make the left wheel and the right wheel to meet a rotation speed difference required for the vehicle to be turned; controlling, when the vehicle is in the straight-line driving condition, the first inner rotor and the second inner rotor to rotate in a same direction and at a same rotation speed.

Specifically, the whole vehicle controller and the electric motor control unit of the vehicle can be used to obtain current turning radius of the vehicle, as well as current rotation speed and power and the like of the outer rotor, the first inner rotor, and the second inner rotor in the electric motor, and it can be determined whether the vehicle is in the straight-line driving condition or the turning driving condition based on these driving parameters. For example, when the vehicle is in the turning driving condition, a change of rotation speed of the first inner rotor can be controlled by the whole vehicle controller and the electric motor control unit, to realize a regulation of the rotation speed of the first output end, to be capable of finally realizing changes of a wheel-side output rotation speed and wheel-side output power of the left wheel. Similarly, a change of rotation speed of the second inner rotor can also be controlled simultaneously, to be capable of finally realizing changes of the wheel-side output rotation speed and the wheel-side output power of the right wheel. For example, rotation speeds of the first inner rotor and the second inner rotor can be controlled to change in opposite directions, so that rotation directions of the wheel-side outputs of the left wheel and the right wheel are in opposite directions, to be capable of assisting the vehicle in steering to achieve a smaller turning radius or in-situ steering function of the vehicle. When the vehicle is in straight-line driving condition, that is, the left wheel and the right wheel do not need a rotation speed difference. Since an outer rotor of the electric motor is in transmission connection with a first input end and a second input end of the clutch-transmission group, respectively, that is, rotation speeds input by the outer rotor to the clutch-transmission group are same, that is, under an output of the outer rotor 12, as long as the first rotor and the second inner rotor are controlled to rotate in a same direction and at a same rotation speed, a normal driving in a straight line of the vehicle can be ensured.

Furthermore, when the vehicle is driving in a straight line, a first inner rotor and a second inner rotor can be controlled to rotate in a same direction and at a same rotation speed. In a condition that a normal driving in a straight line of the vehicle is achieved, it is also possible to synchronously increase the rotation speeds of the left wheel and the right wheel or achieve synchronous reduction of the rotation speeds of the left wheel and the right wheel. That is, the first inner rotor and the second inner rotor play a role of performing power splitting, and speed regulation and torque regulation. Optionally, there is no need for arranging a differential which is in a traditional vehicle, and two inner rotors share one stator, to enable the two inner rotors to have an advantageous of a higher power density.

BRIEF DESCRIPTION OF DRAWINGS

FIG. 1 is a simplified structural schematic diagram of a drive assembly according to an embodiment of the invention.
FIG. 2 is a simplified schematic diagram showing a structure and a force analysis of a first planetary gear train according to an embodiment of the invention.
FIG. 3 is a first schematic diagram showing a speed regulation and power splitting of a first inner rotor and a second inner rotor in a drive assembly according to an embodiment of the invention.
FIG. 4 is a second schematic diagram showing a speed regulation and power splitting of a first inner rotor and a second inner rotor in a drive assembly according to an embodiment of the invention.
FIG. 5 is a flow chart of a control method according to an embodiment of the invention.

In the drawings, corresponding relationships between reference signs and component names are as follows: 1, electric motor; 11, stator; 12, outer rotor; 13, first inner rotor; 14, second inner rotor; 131, first cylindrical structure; 2, first planetary gear train; 21, first sun gear; 22, first ring gear; 23, common planetary carrier; 24, first planetary gear; 211, second cylindrical structure; 3, second planetary gear train; 31, second planetary gear; 32, second sun gear; 33, second ring gear; 4, first rotary actuator; 41, first transmission shaft; 42, first transmission gear; 5, second rotary actuator; 51, second transmission shaft; 52, second transmission gear; 6, left wheel; 7, right wheel.

DETAILED DESCRIPTION

To further clarify the objectives, technical solutions, and advantages of embodiments of the invention, specific technical solutions of the invention will be further described below with reference to drawings. The following embodiments are intended to illustrate the invention but are not intended to limit its scope.
In embodiments of the invention, the terms "first" and "second" are used for descriptive purposes only and should not be construed as indicating or implying relative importance or implicitly specifying the number of the technical features indicated. Thus, features defined as "first" or "second" may explicitly or implicitly comprise one or more of such features. In the description of embodiments of the invention, unless otherwise specified, "plurality" means two or more.
Furthermore, in embodiments of the invention, directional terms such as "upper" "lower" "left" and "right" are defined relative to orientations of components schematically illustrated in the drawings. It should be understood that these directional terms are relative concepts, used for relative description and clarification, and may vary accordingly depending on orientation of components in the drawings.
In embodiments of the invention, unless otherwise expressly specified or limited, the term "connection" should be interpreted broadly. For example, "connection" can be a fixed connection, a detachable connection, or an integral connection, and can be directly connected or indirectly connected via an intermediate medium.

In embodiments of the invention, the terms "comprise", "include" or any other variations thereof are intended to encompass non-exclusive inclusion, such that a process, a method, an article, or an apparatus comprising a list of elements includes not only those elements but also other elements not explicitly listed, or elements inherent to such a process, a method, an article, or an apparatus. Without further limitation, an element specified by the phrase "comprising a..." does not preclude presence of additional identical elements in the element comprising a process, a method, an article, or an apparatus.

In embodiments of the invention, the terms such as "exemplary" or "for example" are used to indicate examples, illustrations, or descriptions. Any embodiment or design solution described as "exemplary" or "for example" in embodiments of the invention should not be construed as preferred or advantageous over other embodiments or design solutions. Rather, use of terms such as "exemplary" or "for example" is intended to present relevant concepts in a concrete manner.

The development of pure electric vehicles is getting faster and faster at present, and many types of vehicles adopt a four-wheel drive solution in pursuit of better dynamic performance. For example, each wheel is equipped with a set of electric motor, and four electric motors individually drive four wheels of a vehicle, enabling torques and speeds of the four wheels to be controlled precisely and independently of one another. For example, a ratio of torque output by four electric motors is allocated and adjusted in real time based on vehicle driving conditions (such as curves, slopes, highways, and snowy terrain and the like), in combination with factors such as acceleration, braking, steering, forward, reverse and the like.

However, in existing designs where the four wheels of a vehicle are individually driven by four electric motors, each of four electric motors is consisted of a stator and a rotor system, and can only output a mechanical power or output an electrical power at a same period of use. On the one hand, it is impossible to meet complex requirements where each electric motor simultaneously outputs both a rotary power and an electrical power, or simultaneously outputs both different-speed rotary power and different-power electrical power. Therefore, an existing four-wheel independent drive system is typically large, heavy, and costly, and cannot meet a high power and a high demand of vehicle.

An embodiment of the invention provides a vehicle. It should be noted that the vehicle of the invention may refer to a large vehicle, a small vehicle, a special-purpose vehicle, and the like. For example, the vehicle of the invention, classified by types of vehicles, may be a sedan vehicle, an off-road vehicle model, a multi-purpose vehicle (MPV), or other type of vehicle.

An embodiment of the invention provides a vehicle, comprising a vehicle body, a left wheel, a right wheel, and a drive assembly. The left wheel and the right wheel are arranged below the vehicle body. The left wheel is in transmission connection with a first output end of a clutch-transmission group. The right wheel is in transmission connection with a second output end of the clutch-transmission group. The drive assembly of the vehicle in the invention has advantages of a compact structure and a higher power density.

Traditional electric motors mainly comprise a fixed portion called a stator, and a rotating portion called a rotor. A working principle of the traditional electric motors is based on the law of electromagnetic induction, Ohm's Law of Closed Circuit, and the law of electromagnetic force. Optionally, the stator comprises a winding coil, and the rotor is a permanent magnet. When an electrical power or a servo electrical power with varying frequencies flows to the winding coil via a commutator and a brush, the rotor can be driven to rotate at different rotation speeds or different directions, to output powers at different rotation speeds. However, traditional electric motors often have a low power density and a narrow range of adaptability. If each wheel is equipped with a traditional electric motor, requirements of high power and performance of a vehicle cannot be met, and the traditional electric motor is larger, heavier, and costly.

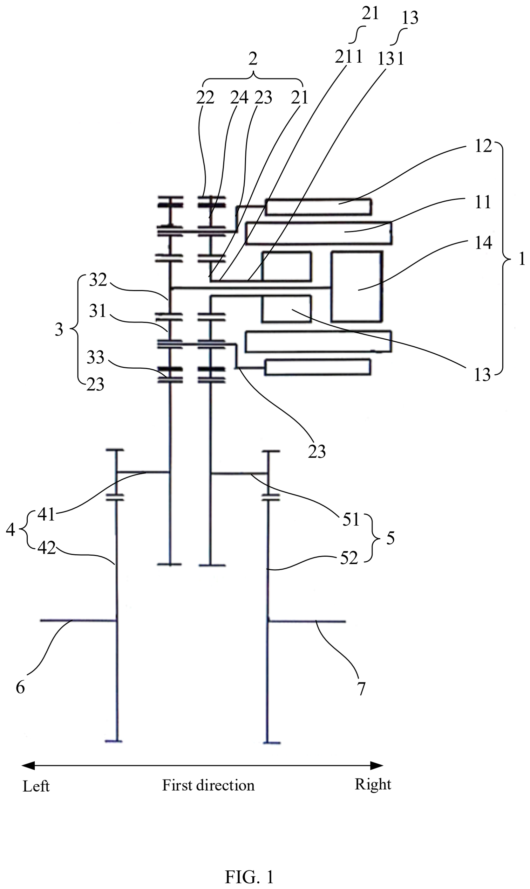

For this, as shown in FIG. 1, the invention provides a drive assembly comprising an electric motor 1 and a clutch-transmission group. Optionally, the electric motor 1 comprises a stator 11 provided with an inner coil and an outer coil, an outer rotor 12 rotatably arranged outside of the stator 11, and a first inner rotor 13 and a second inner rotor 14 rotatably arranged inside the stator 11, the first inner rotor 13 and the second inner rotor 14 being arranged independent of each other. the outer rotor 12 serves as a first power output end of the electric motor 1, and the first inner rotor 13 and the second inner rotor 14 serve as a second power output end of the electric motor 1. The clutch-transmission group comprises a first input end, a second input end, a first output end and a second output end; the outer rotor 12 and the first inner rotor 13 are each in transmission connection with the first input end. The outer rotor 12 and the second inner rotor 14 are each in transmission connection with the second input end. The first input end is in transmission coupling with the first output end, and the second input end is in transmission coupling with the second output end. The first output end is configured to be in transmission connection with a left wheel 6, and the second output end is configured to be in transmission connection with a right wheel 7.

Optionally, the electric motor 1 comprises a stator 11 with an inner coil and an outer coil. Here, the stator 11 with an inner coil and an outer coil may refer to that, for example, the an outer stator coil is arranged outside of the stator 11 and an inner stator coil is arranged inside of the stator 11, and the outer stator coil and the inner stator coil have opposite polarities and are provided with silicon steel sheets, and the silicon steel sheets of the outer stator coil and the silicon steel sheets of the inner stator coil can be staggered or aligned with one another. Preferably, a mutually staggered structure can be adopted to enable the electric motor 1 to have a larger output torque. Here, the stator 11 can be a cylindrical cylinder-shaped structure. The outer rotor 12 can be rotatably sleeved outside the stator 11, and is coaxially arranged with the stator 11. Optionally, outer rotor permanent magnets are distributed on an inner wall of the outer rotor 12 at an interval, as long as the outer rotor 12 can be enabled to rotate about a central axis of the stator 11. The outer rotor 12 serves as a first power output end of the electric motor 1, for example, serves as a primary power output of the vehicle.

Optionally, rotatable first inner rotor 13 and second inner rotor 14 are arranged inside the stator 11. Here, the first inner rotor 13 and the second inner rotor 14 being independently arranged relative to each other specifically refers to that the first inner rotor 13 and the second inner rotor 14 do not affect each other during operation. For example, when the first inner rotor 13 rotates clockwise around the stator 11, the second inner rotor 14 can rotate counterclockwise around the stator 11; or when the first inner rotor 13 and second inner rotor 14 rotate in a same direction, rotation speeds of the first inner rotor 13 and second inner rotor 14 can be different. For example, the first inner rotor 13 and the second inner rotor 14 each can achieve a rotation speed range of $\pm 5,000$ rpm. Optionally, the outer rotor 12 is usually larger than the inner rotor. For example, if the outer rotor 12 has a power of 150 KW, correspondingly a power of the inner rotor is between 40kW to 50 kW, that is, a primary output power of the electric motor 1 is undertook by the outer rotor 12, and the first inner rotor 13 and second inner rotor 14 serve as a secondary power output end of the electric motor 1 to mainly provide auxiliary power output, that is, the first inner rotor 13 and the second inner rotor 14 play a role of performing speed regulation and power splitting, to correspondingly realize changes of output rotation speed and output power of the left wheel 6 and the right wheel 7. Specifically, the outer rotor 12 and the first inner rotor 13 are each in transmission connection with the first input end of the clutch-transmission group, and the first output end of a clutch transmission is in transmission connection with the left wheel 6. Correspondingly, the outer rotor 12 and the second inner rotor 14 are each in transmission connection with the second input end.

Further, an input rotation speed and an output power from the outer rotor 12 to the clutch-transmission group are constant; an output end of the first inner rotor 13 is connected to a first input end of the clutch-transmission group; an output end of the second inner rotor 14 is connected to a second input end of the clutch-transmission group; and the first inner rotor 13 and the second inner rotor 14 do not affect each other during operation due to their independent arrangement relative to each other. Therefore, by adjusting a rotation speed of the first inner rotor 13 and a rotation speed of the second inner rotor 14, for example, by controlling rotation speeds of the first inner rotor 13 and the second inner rotor 14 to be opposite, rotation speeds output to the left wheel 6 and the right wheel 7 can be different, thereby assisting the vehicle in steering to achieve a smaller turning radius or in-situ steering function of the vehicle. Furthermore, for example, when the vehicle is driving in a straight line, the first inner rotor 13 and the second inner rotor 14 can be controlled to rotate at a same rotation speed and in a same direction. Since the electric motor 1 uses one outer rotor 12, when the first inner rotor 13 and the second inner rotor 14 rotate at the same rotation speed and in the same direction, rotation speeds output to the left wheel 6 and the right wheel 7 are also the same, and thus the vehicle can be driven normally in a straight line. While the vehicle is driven in a straight line, rotation speeds of the first inner rotor 13 and the second inner rotor 14 can be correspondingly controlled to be increased to a higher and same rotation speed, thereby increasing a driving speed of the vehicle. With the above-mentioned configuration, since the first inner rotor 13 and the second inner rotor 14 share one stator 11 in the electric motor 1, the drive assembly in the invention has a more compact structure and higher power density.

Further, outer walls of the first inner rotor 13 and the second inner rotor 14 are each wound with a first inner rotor coil and a second inner rotor coil. Since a torque of the electric motor 1 is equal to a mechanical power of the electric motor 1 divided by a mechanical angular velocity of a rotor, and the mechanical angular velocity is proportional to the number of turns in coil, that is, the more turns in coil are, the smaller the torque is, and the fewer the turns in coil are, the larger the torque is. For example, the number of turns in coil of the first inner rotor 13 and the second inner rotor 14 can be smaller, and the number of turns in coil of the outer rotor 12 can be larger. Thus the first inner rotor 13 and the second inner rotor 14 can provide a high torque, that is, when the electric vehicle needs a high torque during driving, the first inner rotor 13 or the second inner rotor 14 is selected to work, and when a high rotation speed is required, the outer rotor 12 is selected to work (a rotation speed of the electric motor 1 is proportional to the number of turns in coil). However, a torque output by an ordinary electric motor can be only determined through a control of current and voltage. When a lower voltage and current are used, an electric motor with a larger is driven, causing more losses of mechanical efficiency. However, the electric motor 1 in the invention can choose the first inner rotor 13 with a smaller load or the second inner rotor 14 with a smaller load to operate to regulate a speed and torque, thereby reducing the losses of mechanical efficiency. At the same time, an electronic control unit can also be used to control operations of the first inner rotor 13 and the second inner rotor 14, to optimize a performance of the electric motor 1 and provide a greater output power. Additionally, the first inner rotor 13 and the second inner rotor 14 can not only play a role of serving as a second power output end for providing a speed regulation and a torque regulation to wheels, but also play a role of generating electricity as an output power. In an embodiment of the invention, the primary focus will be on explaining that the first inner rotor 13 and the second inner rotor 14 serve as a second power output end for providing the speed regulation and torque regulation to wheels.

It should be noted that the first inner rotor 13, the second inner rotor 14, and the outer rotor 12 may operate simultaneously, and may also operate in a time-sharing manner when connected to different power sources, that is, the first inner rotor 13, the second inner rotor 14 or the outer rotor 12, when working, do not affect one other, that is, the first inner rotor 13, the second inner rotor 14, or the outer rotor 12 work independently of one another. For example, when the outer rotor 12 rotates, the first inner rotor 13 may rotate in an opposite direction or a same direction relative to a rotation direction of the outer rotor 12, and at the same time, the second inner rotor 14 may also rotate in an opposite direction or a same direction relative to the rotation direction of the outer rotor 12.

Furthermore, it should be noted that a specific structural form of the clutch-transmission group is not limited. For example, the clutch-transmission group may comprise two planetary gear groups. For example, a planetary carrier and a sun gear of one planetary gear group, as two first input ends, are respectively in transmission connection with the outer rotor 12 and the first inner rotor 13, and an outer ring gear of this planetary gear group, as a first output end, is in transmission connection with the left wheel 6. Correspondingly, a planetary carrier and a sun gear of another planetary gear group, as two second input ends, are respectively in transmission connection with the outer rotor 12 and the second inner rotor 14 . Two outer ring gears of the two planetary gear groups are in transmission connection with the left wheel 6 and the right wheel 7 as a first output end and a second output end, respectively. Alternatively, the clutch-transmission group may be two sets of friction clutch which comprises a power disc, a driving wheel, a driven disc, and a separation operating system. It is not limited in any specific way, as long as the friction clutch comprises a first input end, a second input end, a first output end and a second output end, and the first input end is in transmission coupling with the first output end and the second input end is in transmission coupling with the second output end. Optionally, the first output end and the second output end each can be respectively in transmission connection with the left wheel 6 and the right wheel 7 via a transmission assembly to drive the left wheel 6 and the right wheel 7 in steering. Here, the transmission assembly can be a combination of a plurality of transmission shafts and a plurality of gears. It is not limited in any specific way.

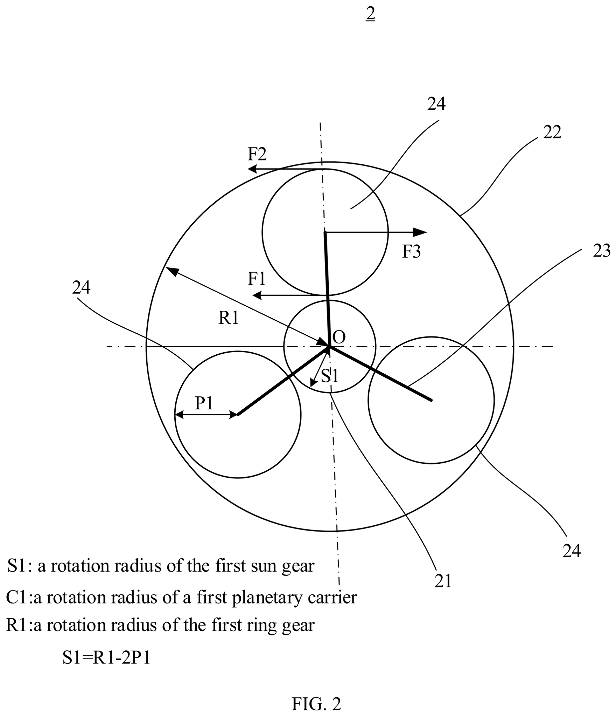

In some embodiments, as shown in FIGS. 1 and 2, the clutch-transmission group comprises a first planetary gear train 2 and a second planetary gear train 3. The first planetary gear train 2 comprises a first sun gear 21, a first planetary gear 24, a first ring gear 22, and a common planetary carrier 23 that mesh with one another. The second planetary gear train 3 comprises a second sun gear 32, a second planetary gear 31, a second ring gear 33, and a common planetary carrier 23 that mesh with one another. The first planetary gear train 2 and the second planetary gear train 3 share one common planetary carrier 23. The common planetary carrier 23 is in transmission connection with the outer rotor 12, and the first sun gear 21 is in transmission connection with the first inner rotor 13. The second sun gear 32 is in transmission connection with the second inner rotor 14. Optionally, the common planetary carrier 23 and the first sun gear 21 serve as a first input end, and the first ring gear 22 serve as a first output end. The common planetary carrier 23 and the second sun gear 32 serve as a second input end, and the second ring gear 33 serves as a second output end. Here, the clutch-transmission group, which adopts the first planetary gear train 2 and the second planetary gear train 3, has advantages of a compact structure, wide range of transmission ratio, and high efficiency compared to a friction clutch transmission and other fixed axis gear trains.

Further, the first planetary gear train 2 and the second planetary gear train 3 adopt a design of the common planetary carrier 23, and thus, on the one hand, the clutch-transmission group can be further made more compact, and a torque far greater than torque generated by three sets of universal planetary gears with a same size can be generated, thereby reducing a noise and saving costs while saving a layout height of two planetary gear trains; on the other hand, the electric motor 1 only has one outer rotor 12, and the outer rotor 12 has a relatively large power output compared to the first inner rotor 13 and the second inner rotor 14, and thus the outer rotor 12 mainly undertakes most of power output. Since the outer rotor 12, serving as the first power output end, is in transmission connection with the common planetary carrier 23, rotation speeds of the first planetary gear train 2 and the second planetary gear train 3 are equal, the first planetary gear train 2 and the second planetary gear train 3 share the common planetary carrier 23. That is, during an entire driving process of an electric vehicle, a power and rotation speed output from the outer rotor 12 to the first planetary gear train 2 and the second planetary gear train 3 are always consistent, to be conducive to finally realizing a rotation speed regulation of the left wheel 6 and the right wheel 7 only by regulating rotation speeds of the first inner rotor 13 and the second inner rotor 14, to be conducive to smoothly coping with turning driving conditions, that is, a speed difference between the left wheel 6 and the right wheel 7 during turning can be achieved without a traditional differential.

It should be noted that due to compositions of the first planetary gear train 2 and the second planetary gear train 3 are consistent, for ease of explanation, only a simplified schematic diagram showing a structure and force analysis of the first planetary gear train 2 are given in drawings of the specification, namely FIG. 2. It can be understood that FIG. 2 can also reflect a simplified schematic diagram showing a structure and a force analysis of the second planetary gear train 3.

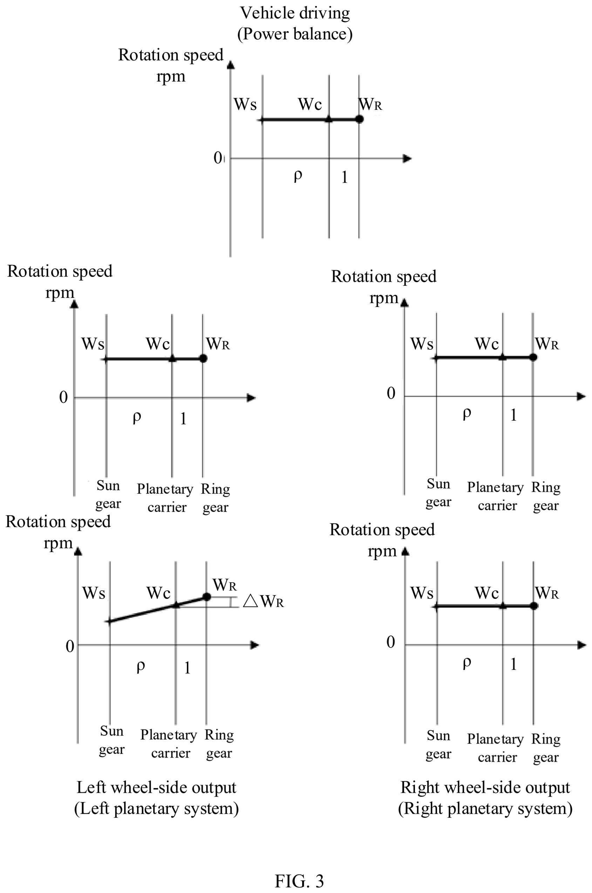

For ease of explanation, as shown in FIGS. 2 and 3, rotation speed relationships among sun gears, planet gears and planetary carriers in the first planetary gear train 2 and the second planetary gear train 3 are explained through the following formulas. Since the first planetary gear train 2 and the second planetary gear train 3 share one common planetary carrier 23, and compositions of the first planetary gear train 2 and the second planetary gear train 3 are consistent, one of the first planetary gear train 2 and the second planetary gear train 3 can be explained. For example, the primary focus will be on explaining that a torque, a force balance, and an energy balance of the first planetary gear train 2 via formulas. Optionally, formula (1) is obtained with a balance of torques, and formula (2) is obtained with a force equilibrium on one of planetary gears, that is, a magnitude relationships among F1, F2, and F3 can be obtained. By combining formulas (3) to (6) with a balance of energy, rotation speed relationships among rotation speed $\omega_{S1}$ of the first sun gear 21, a rotation speed $\omega_{R1}$ of the first ring gear 22, and a rotation speed $\omega_{C1}$ of the common planetary carrier 23 in formulas (8) and (9) can be obtained. Optionally, since the first sun gear 21 is in transmission connection with the first inner rotor 13 of the electric motor 1, that is, a rotation speed $\omega_{S1}$ of the first sun gear 21 can be changed by changing a rotation speed of the first inner rotor 13. Since the common planetary carrier 23 is in transmission connection with the outer rotor 12, a rotation speed $\omega_{C1}$ of the common planetary carrier 23 can be changed by changing a rotation speed of the outer rotor 12. Since the first ring gear 22 is in transmission connection with the left wheel 6, that is, the rotation speed $\omega_{R1}$ of the first ring gear 22 reflects a wheel-side rotation speed of the left wheel 6. Through a change of a rotation speed of the first inner rotor 13, that is, through a change of a rotation speed $\omega_{S1}$ of the first sun gear 21, a rotation speed $\omega_{R1}$ of the first ring gear 22 can be changed, thereby achieving changes in a left wheel-side output rotation speed and a left wheel-side output power of the left wheel 6. That is, the left wheel-side output power and left wheel-side output rotation speed, and the right wheel-side output power and the right wheel-side output power each can be adjusted according to a specific driving condition of the vehicle.

$$F1 \times P1 = F2 \times P1 \qquad \rightarrow F1 = F2 \qquad\qquad (1)$$

$$\overrightarrow{F1} + \overrightarrow{F2} + \overrightarrow{F3} = \overrightarrow{0} \quad \rightarrow F3 = -2F1 = -2F2 \qquad (2)$$

$$\overrightarrow{TS1} = F1 \times S1 \qquad\qquad (3)$$

$$\overrightarrow{TR1} = F2 \times R1 \qquad\qquad (4)$$

$$\overrightarrow{TC1} = F3 \times (S1 + P1) = -F1 \times (S1 + R1) \qquad (5)$$

$$\overrightarrow{TS1}\,\omega_{S1} + \overrightarrow{TC1}\,\omega_{C1} + \overrightarrow{TR1}\,\omega_{R1} = 0 \qquad (6)$$

$$\omega_{S1} + R1/S1 \times \omega_{R1} = (1 + R1/S1)\omega_{C1} \qquad (7)$$

$$R1/S1 = \rho_1 \qquad\qquad (8)$$

$$\omega_{S1} + \rho_1\,\omega_{R1} = (1 + \rho_1)\omega_{C1} \qquad\qquad (9)$$

Continuingly, as shown in FIGS. 1 and 2, the stator 11 is a cylindrical stator 11. The first sun gear 21, the second sun gear 32, the outer rotor 12, the first inner rotor 13 and the second inner rotor 14 each are coaxially arranged with the stator 11. In a first direction, the second planetary gear train 3, the first planetary gear train 2, the first inner rotor 13, and the second inner rotor 14 are arranged in sequence. Optionally, the first direction is along a central axis of the stator 11. Optionally, in the first direction, the second planetary gear train 3, the first planetary gear train 2, the first inner rotor 13, and the second inner rotor 14 are arranged in sequence. It can be understood that the second planetary gear train 3 and the second inner rotor 14 are located at two outer sides, i.e., a leftmost side and a rightmost side, and the first planetary gear train 2 and the first inner rotor 13 are adjacent to each other which are located between the second planetary gear train 3 and the first inner rotor 13. For ease of explanation, as shown in FIG. 1, the second planetary gear train 3 is located at a leftmost side in the first direction, and the first planetary gear train 2 is located at a rightmost side in the first direction. In the first direction, from left to right, the second planetary gear train 3, the first planetary gear train 2, the first inner rotor 13, and the second inner rotor 14 are arranged in sequence. Here, since the first planetary gear train 2 and the second planetary gear train 3 are designed to share one common planetary carrier 23, and the second planetary gear train 3 and the first planetary gear train 2 are designed to be adjacent in the first direction, the first planetary gear train 2 and the second planetary gear train 3 occupy less space in the first direction, thereby being convenient for designing the common planetary carrier 23. The above-mentioned design can make a layout of the electric motor 1 and the clutch-transmission group simpler and more compact.

Optionally, as shown in FIG. 1, a side of the first inner rotor 13 facing away from the second inner rotor 14 is provided with a hollow first cylindrical structure 131 for serving as an output shaft of the first inner rotor 13. A side of the first sun gear 21 facing away from the second sun gear 32 is provided with a second cylindrical structure 211 for serving as an input shaft of the first sun gear 21. The first cylindrical structure 131 is in transmission connection with the second cylindrical structure 211. Here, since a diameter dimension of the first cylindrical structure 131 is similar to that of the second cylindrical structure 211, and FIG. 1 is a simplified structural schematic diagram, the first cylindrical structure 131 and the second cylindrical structure 211 in FIG. 1 appear to be a complete cylindrical structure. In the first direction, an output shaft of the second inner rotor 14 can sequentially pass through the first cylindrical structure 131, the second cylindrical structure, and subsequently be in transmission connection with an input shaft of the second sun gear 32. Here, since the first inner rotor 13 and the second inner rotor 14 both take a central axis of the stator 11 as a rotation axis, that is, the first inner rotor 13 and the second inner rotor 14 rotate coaxially.

Here, the output shaft of the first inner rotor 13 is made into a hollow cylindrical structure, so that the output shaft of the second inner rotor 14 can pass through the output shaft of the first inner rotor 13. In this way, an orthographic projection of the output shaft of the first inner rotor 13 and an orthographic projection of the output shaft of the second inner rotor 14 on a first plane will not overlap or interfere, and in turn independent normal operations of the first inner rotor 13 and the second inner rotor 14 will not be affected. Optionally, the first plane is a plane perpendicular to the first direction. Similarly, since the rightmost second inner rotor 14 needs to be in transmission connection with the leftmost second sun gear 32, the input shaft of the second sun gear 32 is designed as a hollow second cylindrical structure 211, and the first cylindrical structure 131 is in transmission connection with the second cylindrical structure 211, to be convenient for the output shaft of the second inner rotor 14 to pass through the first cylindrical structure 131 and the second cylindrical structure 211, which are in transmission connection, in sequence. In such configuration, compared to adding other transmission assembly between the leftmost second planetary gear train 3 and the rightmost second inner rotor 14, such as using a combination of an intermediate shaft and a gear group, a space occupied by the drive assembly in the first direction can be reduced, to make an overall structure of the drive assembly more simpler and compact.

Furthermore, as shown in FIG. 1, the drive assembly further comprises a first rotary actuator 4 and a second rotary actuator 5. The first rotary actuator 4 comprises a first transmission shaft 41 and a first transmission gear 42. The second rotary actuator 5 comprises a second transmission shaft 51 and a second transmission gear 52. Optionally, an input end and an output end of the first transmission shaft 41 are in transmission connection with an output end of the first ring gear 22 and an input end of the first transmission gear 42, respectively, and an output end of the first transmission gear 42 is in transmission connection with an input end of the left wheel 6 for steering the left wheel 6. An input end and an output end of the second transmission shaft 51 are in transmission connection with an output end of the second ring gear 33 and an input end of the second transmission gear 52, respectively. An output end of the second transmission gear 52 is in transmission connection with an input end of the right wheel 7 for steering the right wheel 7 .

In some embodiments, as shown in FIG. 1, orthographic projections of the first inner rotor 13 and the second inner rotor 14 on an inner wall of a side of the stator 11 facing away from the outer rotor 12 each fall on the stator 11.

As shown in FIG. 1, the first ring gear 22 and the second ring gear 33 are coaxially arranged, and radial dimensions of the first ring gear 22 and the second ring gear 33 are equal. Since a maximum dimension of the first planetary gear train 2 and the second planetary gear train 3 is usually determined by a dimension of ring gear, a design of the first ring gear 22 and the second ring gear 33 with equal radial dimensions, combined with a coaxial arrangement of the first sun gear 21 and the second sun gear 32, makes a clutch transmission group formed by the first planetary gear train 2 and the second planetary gear train 3 to have a symmetrical and compact structure.

In some embodiments, the drive assembly further comprises an outer housing. The clutch-transmission group and the electric motor 1 each are integrated in the outer housing. In this way, an integration of the drive assembly can be increased.

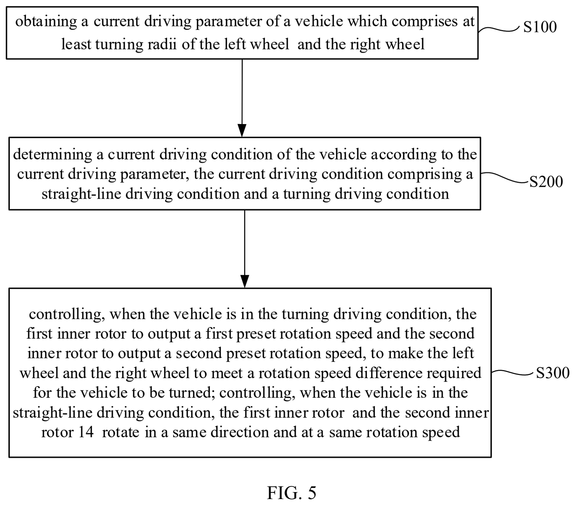

As shown in FIG. 5, an embodiment of the invention further provides a control method, comprising:

Step S100: obtaining a current driving parameter of a vehicle which comprises at least turning radii of the left wheel 6 and the right wheel 7;

Step S200: determining a current driving condition of the vehicle according to the current driving parameter, the current driving condition comprising a straight-line driving condition and a turning driving condition; and

Step S300: controlling, when the vehicle is in the turning driving condition, the first inner rotor 13 to output a first preset rotation speed and the second inner rotor 14 to output a second preset rotation speed, to make the left wheel 6 and the right wheel 7 to meet a rotation speed difference required for the vehicle to be turned; controlling, when the vehicle is in the straight-line driving condition, the first inner rotor 13 and the second inner rotor 14 to rotate in a same direction and at a same rotation speed.

In some embodiments, the vehicle comprises a whole vehicle controller and an electric motor control unit. Optionally, the whole vehicle controller is used to obtain a current driving parameter of the vehicle, and serves as a main controller of the vehicle, to coordinate various systems to complete an allocation and calculation of a required output power torque and rotation speed of the outer rotor 12, the first inner rotor 13, and the second inner rotor 14 in the electric motor 1, and to obtain, based on the current driving parameter , currently required torque, output power, rotation speed of the vehicle, and to determine the current driving condition. The electric motor control unit is used to, according to a command sent by the whole vehicle controller, make the outer rotor 12, the first inner rotor 13, and the second inner rotor 14 in the electric motor 1 do a response action.

Specifically, in Step S100, the whole vehicle controller and the electric motor control unit of the vehicle can be used to obtain current turning radius of the vehicle, as well as current rotation speed and power and the like of the outer rotor 12, the first inner rotor 13, and the second inner rotor 14 in the electric motor 1. Continuingly, with Step S200, it can be determined whether the vehicle is in the straight-line driving condition or the turning driving condition based on these driving parameters. Furthermore, for Step S300, when the vehicle is in the turning driving condition, a change of rotation speed of the first inner rotor 13 can be controlled by the whole vehicle controller and the electric motor control unit, to realize a regulation of the rotation speed of the first output end, to be capable of finally realizing changes of a wheel-side output rotation speed and a wheel-side output power of the left wheel 6. Similarly, a change of rotation speed of the second inner rotor 14 can also be controlled simultaneously, to be capable of finally realizing changes of a wheel-side output rotation speed and wheel-side output power of the right wheel 7. For example, rotation speeds of the first inner rotor 13 and the second inner rotor 14 can be controlled to change in opposite directions, so that the wheel-side out rotation direction of the left wheel 6 and the wheel-side out rotation direction of the right wheel 7 are opposite, to be capable of assisting the vehicle in steering to achieve a smaller turning radius or in-situ steering function of the vehicle.

When the vehicle is in straight-line driving condition, that is, a rotation speed difference between the left wheel 6 and the right wheel 7 are not required. Since an outer rotor 12 of the electric motor 1 is in transmission connection with a first input end and a second input end of the clutch-transmission group, respectively, that is, rotation speeds input by the outer rotor 12 to the clutch-transmission group are same, that is, under an output of the outer rotor 12, as long as the first rotor 13 and the second inner rotor 14 are controlled to rotate in a same direction and at a same rotation speed, a normal driving in a straight line of the vehicle can be ensured. Furthermore, when the vehicle is driving in a straight line, a first inner rotor 13 and a second inner rotor 14 can be controlled to rotate in a same direction and at a same rotation speed. In a condition that a normal driving in a straight line of the vehicle is achieved, it is also possible to synchronously increase the rotation speeds of the left wheel 6 and the right wheel 7 or achieve synchronous reduction of the rotation speeds of the left wheel 6 and the right wheel 7. That is, the first inner rotor 13 and the second inner rotor 14 play a role of power splitting, and speed regulation and torque regulation. Furthe, a rotation speed difference between the left wheel and the right wheel can be achieved with no need for arranging a differential which is in a traditional vehicle, and two inner rotors share one stator 11 to enable the two inner rotors to have an advantageous of higher power density.

Furthermore, for ease of explanation, as shown in FIG. 3, an explanatory diagram showing a speed regulation and a power splitting of a first inner rotor 13 and a second inner rotor 14 according to an embodiment of the invention. For ease of explanation, a left planetary system in FIG. 3 is a second planetary gear train 3; a sun gear, a planetary carrier, and an internal gear in the left planetary system correspond to a second sun gear 32, a common planetary carrier 23, and a second ring gear 33 of the second planetary gear train 3. A rotation speed $\omega_S$ of the sun gear, a rotation speed $\omega_C$ of the planetary carrier, and a rotation speed $\omega_R$ of the internal gear at a left side correspond to a rotation speed $\omega_S$ of the second sun gear 32, a rotation speed $\omega_C$ of the common planetary carrier 23, and a rotation speed $\omega_R$ of the second ring gear 33, respectively. Correspondingly, the right planetary system is the first planetary gear train 2. A rotation speed $\omega_S$ of the sun gear, a rotation speed $\omega_C$ of the planetary carrier, and a rotation speed $\omega_R$ of the internal gear at a right side correspond to the rotation speed $\omega_S$ of the first sun gear 21, a rotation speed $\omega_C$ of the common planetary carrier 23, and a rotation speed $\omega_R$ of the first ring gear 22, respectively. In FIG. 3, the first-row diagram represents the vehicle in power balance, with three rotation speeds being the same, that is, the vehicle is in a straight-line driving condition. In FIG. 3, the left side diagram of second-row diagram represents a diagram of rotation speed relationship of the left planetary system which is in transmission connection with the left wheel 6; the right-side diagram of second-row diagram represents a diagram of rotation speed relationship of the right planetary system which is in transmission connection with the right wheel 7, and it can be seen that since the first planetary gear train 2 and the second planetary gear train 3 share one common planetary carrier 23, the rotation speeds $\omega_C$ of the common planetary carrier 23 in the two diagrams of second-row are the same; the rotation speeds $\omega_S$ of the sun gears of the left and right planetary systems in the second-row are equal, and thus the rotation speeds $\omega_R$ of the internal gears of the left and right planetary systems are also equal, that is, the vehicle is in the straight-line driving condition at this time.

Continuingly, as shown in the third-row diagram of FIG. 3, the rotation speed $\omega_S$ of the second sun gear 32 in the left planetary system (second planetary gear train 3) is decreased compared to the rotation speed $\omega_S$ of the first sun gear 21 in the right planetary system (first planetary gear train 2). Since the left and right planetary systems share one common planetary carrier, i.e., in a condition that the rotation speeds $\omega_C$ of the planetary carriers of the left planetary system (second planetary gear train 3) and the right planetary system (first planetary gear train 2) are equal, the rotation speed $\omega_S$ of the second sun gear 32 being decreased compared to the rotation speed $\omega_S$ of the first sun gear 21 may cause a generated rotation speed difference $\Delta\omega_R$ between the left wheel 6 and the right wheel 7, thereby facilitating a realization of turning. Since the second sun gear 32 is in transmission connection with the second inner rotor 14, and the first sun gear 21 is in transmission connection with the first inner rotor 13, a rotation speed difference $\Delta\omega_R$ can be made to be generated between the left wheel 6 and the right wheel 7 by changing the rotation speeds of the second inner rotor 14 and the rotation speed of the first inner rotor 13, to make the driving assembly to further have a function of differential.

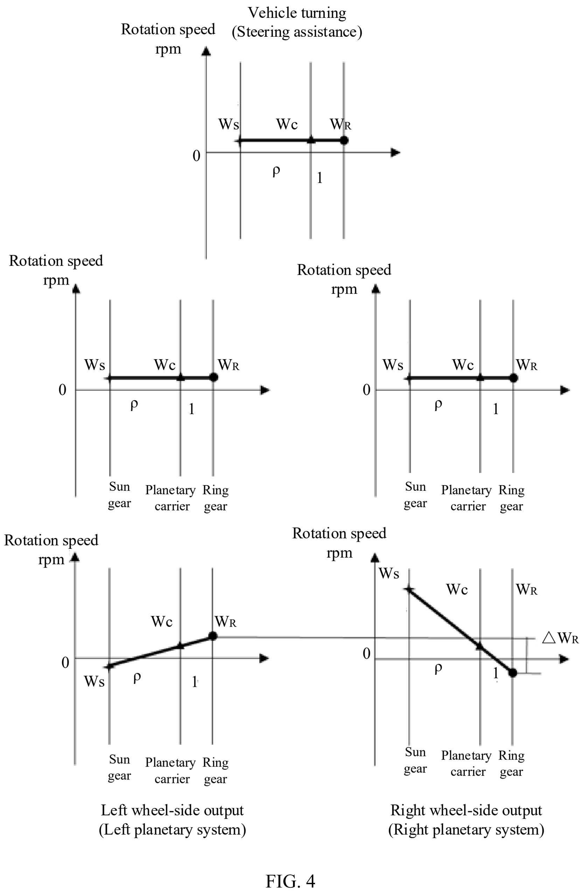

As shown in FIG. 4, FIG. 4 is another explanatory diagram showing a speed regulation and a power splitting of a first inner rotor 13 and a second inner rotor 14 according to an embodiment of the invention. A left planetary system in FIG. 4 is a second planetary gear train 3; a sun gear, a planetary carrier, and an internal gear in the left planetary system correspond to a second sun gear 32, a common planetary carrier 23, and a second ring gear 33 of the second planetary gear train 3. A rotation speed $\omega_S$ of the sun gear, a rotation speed $\omega_C$ of the planetary carrier, and a rotation speed $\omega_R$ of the internal gear at a left side correspond to a rotation speed $\omega_S$ of the second sun gear 32, a rotation speed $\omega_C$ of the common planetary carrier 23, and a rotation speed $\omega_R$ of the second ring gear 33, respectively. Correspondingly, the right planetary system is the first planetary gear train 2. A rotation speed $\omega_S$ of the sun gear, a rotation speed $\omega_C$ of the planetary carrier, and a rotation speed $\omega_R$ of the internal gear at a right side correspond to the rotation speed $\omega_S$ of the first sun gear 21, a rotation speed $\omega_C$ of the common planetary carrier 23, and a rotation speed $\omega_R$ of the first ring gear 22, respectively. In FIG. 4, the first-row diagram represents that the vehicle is in a straight-line driving condition with three rotation speeds being the same. In FIG. 4, the left side diagram of second-row diagram represents a diagram showing rotation speed relationship of the left planetary system which is in transmission connection with the left wheel 6; the right-side diagram of second-row diagram represents a diagram of rotation speed relationship of the right planetary system which is in transmission connection with the right wheel 7, and it can be seen that since the first planetary gear train 2 and the second planetary gear train 3 share one common planetary carrier 23, the rotation speeds $\omega_C$ of the common planetary carrier 23 in the two diagrams at second row are the same; the rotation speeds $\omega_S$ of the sun gears of the left and right planetary systems in the second-row are equal, and thus the rotation speeds $\omega_R$ of the internal gears of the left and right planetary systems are also equal, that is, the vehicle is in the straight-line driving condition at this time.

Continuingly, as shown in the third-row diagram of FIG. 4, the rotation speed $\omega_S$ of the second sun gear 32 in the left planetary system (second planetary gear train 3) is a negative rotation speed, the rotation speed $\omega_S$ of the first sun gear 21 in the right planetary system (first planetary gear train 2) is a positive rotation speed, and rotation directions of the negative rotation speed and the positive rotation speed are opposite. Since the left and right planetary systems share one common planetary carrier, the rotation speeds $\omega_C$ of the planetary carriers of the left and right planetary systems are equal, to bring about a large rotation speed difference $\Delta\omega_R$ between a rotation speed $\omega_R$ output by the second ring gear 33 in the second planetary gear train 3 and a rotation speed $\omega_R$ output by the first ring gear 22 in the first planetary gear train 2, and at the same time to make the wheel-side output of the left wheel 6 and the wheel-side output of the right wheel 7 rotate in opposite directions to be capable of assisting the vehicle in steering to achieve a smaller turning radius or in-situ steering function.

The sequence number of the embodiments of the invention is for description only and does not represent advantages or disadvantages of the embodiments. The above are only preferred embodiments of the invention and do not limit the patent scope of the invention. Any equivalent structure or equivalent process transformation made using the content of the specification and drawings of the invention, or directly or indirectly applied in other related technical fields, shall equally to be included in the scope of patent protection of the invention.

**Claims**

1. A drive assembly, comprising:

   an electric motor, comprising a stator with an inner coil and an outer coil, an outer rotor rotatably arranged outside the stator, and a first inner rotor and a second inner rotor which are rotatably arranged inside the stator, the first inner rotor and the second inner rotor being independently arranged relative to each other;
   the outer rotor serves as a first power output end of the electric motor, and the first inner rotor and the second inner rotor are configured for power generation or serving as a second power output end of the electric motor; and
   a clutch-transmission group, comprising a first input end, a second input end, a first output end and a second output end, the outer rotor and the first inner rotor each being in transmission connection with the first input end, the outer rotor and the second inner rotor each being in transmission connection with the second input end, wherein the first input end is in transmission coupling with the first output end, and the second input end is in transmission coupling with the second output end;
   the first output end is configured to be in transmission connection with a left wheel, and the second output end is configured to be in transmission connection with a right wheel.

2. The drive assembly according to claim 1, wherein the clutch-transmission group comprises a first planetary gear train and a second planetary gear train;

   the first planetary gear train comprises a first sun gear, a first planetary gear, a first ring gear, and a common planetary carrier that mesh with one another;

the second planetary gear train comprises a second sun gear, a second planetary gear, a second ring gear, and a common planetary carrier that mesh with one another, the first planetary gear train and the second planetary gear train sharing the common planetary carrier;

the common planetary carrier is in transmission connection with the outer rotor, the first sun gear being in transmission connection with the first inner rotor, the second sun gear being in transmission connection with the second inner rotor;

wherein the common planetary carrier and the first sun gear are the first input end, and the first ring gear is the first output end; the common planetary carrier and the second sun gear are the second input end, and the second ring gear is the second output end.

3. The drive assembly according to claim 2, wherein the stator is a cylindrical stator, and the first sun gear, the second sun gear, the outer rotor, the first inner rotor, and the second inner rotor each are coaxially arranged with the stator;

in a first direction, the second planetary gear train, the first planetary gear train, the first inner rotor, and the second inner rotor are sequentially arranged, wherein the first direction is along a direction of central axis of the stator.

4. The drive assembly according to claim 3, wherein a side, facing away from the second inner rotor, of the first inner rotor comprises a first cylindrical structure which is hollow and serves as an output shaft of the first inner rotor;

a side, facing away from the second sun gear, of the first sun gear comprises a second cylindrical structure which is hollow and serves as an input shaft of the first sun gear;

the first cylindrical structure is in transmission connection with the second cylindrical structure, wherein in the first direction, an output shaft of the second inner rotor is able to sequentially pass through the first cylindrical structure, the second cylindrical structure, and subsequently be in transmission connection with an input shaft of the second sun gear.

5. The drive assembly according to claim 3, wherein the drive assembly further comprises a first rotary actuator and a second rotary actuator, wherein the first rotary actuator comprises a first transmission shaft and a first transmission gear, and the second rotary actuator comprises a second transmission shaft and a second transmission gear;

wherein an input end and an output end of the first transmission shaft are in transmission connection with an output end of the first ring gear and an input end of the first transmission gear, respectively, and an output end of the first transmission gear is in transmission connection with an input end of the left wheel for driving the left wheel in steering;

an input end and an output end of the second transmission shaft are in transmission connection with an output end of the second ring gear and an input end of the second transmission gear, respectively, and an output end of the second transmission gear is in transmission connection with an input end of the right wheel for driving the right wheel in steering.

6. The drive assembly according to claim 3, wherein orthographic projections of the first inner rotor and the second inner rotor on an inner wall of a side of the stator facing away from the outer rotor each fall on the stator.

7. The drive assembly according to claim 3, wherein the first ring gear and the second ring gear are coaxially arranged, and radial dimensions of the first ring gear and the second ring gear are equal.

8. The drive assembly according to claim 3, wherein the drive assembly further comprises an outer housing, the clutch-transmission group and the electric motor each being integrated in the outer housing.

9. A vehicle, comprising:

a vehicle body;

a drive assembly according to any one of claims 1 to 7;

a left wheel and a right wheel arranged below the vehicle body, the left wheel being in transmission connection with the first output end, the right wheel being in transmission connection with the second output end; and

a whole vehicle controller for controlling a response action of the electric motor.

10. A control method, adopting the drive assembly according to any one of claims 1 to 7, comprising:

obtaining current driving parameters of a vehicle which comprise at least turning radii of the left wheel and the right wheel;

determining a current driving condition of the vehicle according to the current vehicle driving parameters, the current driving condition comprising a straight-line driving condition and a turning driving condition; and

controlling, when the vehicle is in the turning driving condition, the first inner rotor to output a first preset rotation speed and the second inner rotor to output a second preset rotation speed, to make the left wheel and the right wheel to meet a rotation speed difference therebetween required for the vehicle to be turned; and

controlling, when the vehicle is in the straight-line driving condition, the first inner rotor and the second inner rotor to rotate in a same direction and at a same rotation speed.

FIG. 1

S1: a rotation radius of the first sun gear

C1: a rotation radius of a first planetary carrier

R1: a rotation radius of the first ring gear

$$S1 = R1 - 2P1$$

FIG. 2

FIG. 3

Vehicle turning
(Steering assistance)

Rotation speed
rpm

$W_S$    $W_C$    $W_R$

0

$\rho$    1

Rotation speed
rpm

$W_S$    $W_C$    $W_R$

0

$\rho$    1

Sun
gear    Planetary
carrier    Ring
gear

Rotation speed
rpm

$W_S$    $W_C$    $W_R$

0

$\rho$    1

Sun
gear    Planetary
carrier    Ring
gear

Rotation speed
rpm

$W_C$    $W_R$

0

$W_S$    $\rho$    1

Sun
gear    Planetary
carrier    Ring
gear

Left wheel-side output
(Left planetary system)

Rotation speed
rpm

$W_S$    $W_C$    $W_R$

0    $\triangle W_R$

$\rho$    1

Sun
gear    Planetary
carrier    Ring
gear

Right wheel-side output
(Right planetary system)

FIG. 4

17

| obtaining a current driving parameter of a vehicle which comprises at least turning radii of the left wheel and the right wheel | S100 |
|---|---|

| determining a current driving condition of the vehicle according to the current driving parameter, the current driving condition comprising a straight-line driving condition and a turning driving condition | S200 |
|---|---|

| controlling, when the vehicle is in the turning driving condition, the first inner rotor to output a first preset rotation speed and the second inner rotor to output a second preset rotation speed, to make the left wheel and the right wheel to meet a rotation speed difference required for the vehicle to be turned; controlling, when the vehicle is in the straight-line driving condition, the first inner rotor and the second inner rotor 14 rotate in a same direction and at a same rotation speed | S300 |
|---|---|

FIG. 5

## INTERNATIONAL SEARCH REPORT

| International application No. |
|---|
| **PCT/CN2024/100901** |

**A.      CLASSIFICATION OF SUBJECT MATTER**

B60K1/02(2006.01)i;  B60K17/02(2006.01)i;  B60K17/04(2006.01)i;  B60K17/22(2006.01)i

According to International Patent Classification (IPC) or to both national classification and IPC

**B.      FIELDS SEARCHED**

Minimum documentation searched (classification system followed by classification symbols)

IPC: B60K

Documentation searched other than minimum documentation to the extent that such documents are included in the fields searched

Electronic data base consulted during the international search (name of data base and, where practicable, search terms used)

CNTXT, ENTXT, CNABS, DWPI, CNKI: 第二内转子, 第三转子, 离合, 车轮, 定子 , second inner rotor, third rotor, clutch, wheel, stator

**C.      DOCUMENTS CONSIDERED TO BE RELEVANT**

| Category* | Citation of document, with indication, where appropriate, of the relevant passages | Relevant to claim No. |
|---|---|---|
| PX | CN 116572721 A (DONGFENG MOTOR GROUP CO., LTD.) 11 August 2023 (2023-08-11) entire document | 1-10 |
| X | JP 2008254541 A (TOYOTA CENTRAL RESEARCH & DEVELOPMENT LABS INC et al.) 23 October 2008 (2008-10-23) description, paragraphs 9-17, and figures 1-9 | 1-10 |
| A | CN 101988567 A (NIPPON SOKEN INC.) 23 March 2011 (2011-03-23) entire document | 1-10 |
| A | CN 102398512 A (NIPPON SOKEN INC. et al.) 04 April 2012 (2012-04-04) entire document | 1-10 |
| A | CN 102481925 A (HONDA MOTOR CO., LTD.) 30 May 2012 (2012-05-30) entire document | 1-10 |
| A | CN 215153939 U (SL CORP.) 14 December 2021 (2021-12-14) entire document | 1-10 |

☐ Further documents are listed in the continuation of Box C.      ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 September 2024** | **29 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100901**

| Patent document cited in search report | | | Publication date (day/month/year) | Patent family member(s) | | | Publication date (day/month/year) |
|---|---|---|---|---|---|---|---|
| CN | 116572721 | A | 11 August 2023 | None | | | |
| JP | 2008254541 | A | 23 October 2008 | None | | | |
| CN | 101988567 | A | 23 March 2011 | US | 2011028260 | A1 | 03 February 2011 |
| | | | | US | 8602933 | B2 | 10 December 2013 |
| | | | | JP | 2011033116 | A | 17 February 2011 |
| | | | | JP | 5372648 | B2 | 18 December 2013 |
| | | | | DE | 102010036748 | A1 | 03 March 2011 |
| CN | 102398512 | A | 04 April 2012 | US | 2015045181 | A1 | 12 February 2015 |
| | | | | US | 9545842 | B2 | 17 January 2017 |
| | | | | US | 2012028749 | A1 | 02 February 2012 |
| | | | | US | 8900080 | B2 | 02 December 2014 |
| | | | | DE | 102011080081 | A1 | 02 February 2012 |
| CN | 102481925 | A | 30 May 2012 | WO | 2011036938 | A1 | 31 March 2011 |
| | | | | US | 2012277059 | A1 | 01 November 2012 |
| | | | | US | 8647230 | B2 | 11 February 2014 |
| | | | | DE | 112010003782 | T5 | 22 November 2012 |
| | | | | JPWO | 2011036938 | A1 | 14 February 2013 |
| | | | | JP | 5309220 | B2 | 09 October 2013 |
| CN | 215153939 | U | 14 December 2021 | US | 2021199180 | A1 | 01 July 2021 |
| | | | | US | 11691503 | B2 | 04 July 2023 |
| | | | | DE | 102020135169 | A1 | 01 July 2021 |
| | | | | US | 2023249544 | A1 | 10 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310804499